Europäisches Patentamt

European Patent Office

Office européen des brevets

(19)

(11) **EP 0 898 147 A2**

(12) **EUROPÄISCHE PATENTANMELDUNG**

(43) Veröffentlichungstag:
24.02.1999 Patentblatt 1999/08

(51) Int. Cl.⁶: **G01B 11/06**

(21) Anmeldenummer: 98103365.7

(22) Anmeldetag: 26.02.1998

(84) Benannte Vertragsstaaten:
**AT BE CH DE DK ES FI FR GB GR IE IT LI LU MC
NL PT SE**
Benannte Erstreckungsstaaten:
**AL LT LV MK RO SI**

(30) Priorität: **20.08.1997 DE 19736138**

(71) Anmelder:
**Daimler-Benz Aktiengesellschaft
70567 Stuttgart (DE)**

(72) Erfinder:
**Griesinger, Manfred, Dr.
71229 Leonberg (DE)**

(54) **Verfahren zur Bestimmung des Zustands einer Fahrbahnoberfläche und Vorrichtung zur Durchführung des Verfahrens**

(57) Die Erfindung betrifft Verfahren zur Bestimmung des Zustands einer Fahrbahnoberfläche, bei dem das von einer Fahrbahnoberfläche rückgestreute Licht in Spektralkomponenten zerlegt und der so erhaltene wellenlängenabhängige Verlauf der Rückstreuintensität ausgewertet wird. Dazu wird das wellenlängenabhängige Rückstreulichtspektrum einer trockenen Fahrbahnoberfläche mit einer mathematischen Funktion mit freien Parametern angesetzt und diese Funktion mit einem exponentiellen Absorptionsterm, der die Lichttransmission einer Wasserschicht bestimmter Dicke beschreibt, multipliziert, um eine mathematische Funktion für den wellenlängenabhängigen Verlauf der Rückstreuintensität zu erhalten, wie sie auf den Empfänger trifft. Anhand der tatsächlichen Meßwerte können dann die freien Parameter der Funktion im Sinne einer bestmöglichen Approximation errechnet werden, woraus sich u.a. die Dicke der Wasserschicht ergibt.

Die Vorrichtung stellt ein Spektrometer dar, welches anstelle eines dispersiven Elementes ein absorbierendes Element verwendet, welches unmittelbar auf eine CCD-Sensorzeile aufgebracht ist.

Fig. 2

EP 0 898 147 A2

**Beschreibung**

Die Erfindung bezieht sich auf ein Verfahren zur Bestimmung des Zustands einer Fahrbahnoberfläche nach dem Oberbegriff des Anspruchs 1 beziehungsweise des Anspruch 2. Die Erfindung bezieht ferner auf eine Vorrichtung nach dem Oberbegriff des Anspruchs 8, die insbesondere zur Durchführung des Verfahrens geeignet ist.

Das Verfahren dient insbesondere dazu, das Vorhandensein von Wasser oder Eis auf der Fahrbahnoberfläche qualitativ und vorzugsweise auch quantitativ zu erfassen und kann von einer in einem Fahrzeug montierten Vorrichtung durchgeführt werden.

Ein Verfahren von im wesentlichen dieser Art ist in der Offenlegungsschrift DE 41 33 359 A1 beschrieben. Mit dem dortigen Verfahren soll die Dicke einer Wasserschicht auf einer Fahrbahn berührungslos erfaßt werden können. Das auf die Fahrbahnoberfläche eingestrahlte Licht enthält dazu wenigstens zwei Wellenlängen aus dem nahen Infrarotbereich, die einer unterschiedlich starken Wasserabsorption unterliegen. Beispielsweise sind für einen empfindlichen Meßbereich eine Meßwellenlänge bei 1450nm und eine Vergleichswellenlänge bei 1190nm mit demgegenüber schwächerer Absorption und für einen unempfindlicheren Meßbereich eine Meßwellenlänge von 1190nm und eine demgegenüber noch schwächer absorbierte Vergleichswellenlänge von 1080nm gewählt. Unter der Annahme eines exponentiellen Absorptionsgesetzes und einer "grauen" Fahrbahnoberfläche, d.h. einer solchen, die alle Wellenlängen mit gleichem Anteil absorbiert, wird dann die Dicke einer auf der Fahrbahnoberfläche vorhandenen Wasserschicht bestimmt.

Die Annahme eines grauen Strahlers für die Fahrbahnoberfläche ist kritisch, denn Messungen an verschiedenen Fahrbahnbelägen haben ergeben, daß sie nur beschränkt gültig ist und z.B. manche Fahrbahnbeläge einen merklichen Anstieg ihres spektralen Reflexionsvermögens mit wachsender Wellenlänge zeigen. Es besteht daher Bedarf an einem vom spektralen Reflexionsvermögen der jeweiligen Fahrbahnoberfläche weitestgehend unabhängigen Verfahren. Wünschenswert ist zudem ein Verfahren, das bei Bedarf so ausgelegt werden kann, daß es sich auch zur Erkennung eines Eis- oder Schneebelags auf der Fahrbahnoberfläche eignet.

Aus der Patentschrift DE 41 41 446 C1 ist ein Verfahren zur Messung der Dicke einer Schicht aus Wasser, Schnee oder Eis auf einer Fahrbahnoberfläche bekannt, das auf Laufzeitmessungen basiert.

Eine in der Offenlegungsschrift DE 30 23 444 A1 offenbarte Straßenzustandsermittlungseinrichtung arbeitet dergestalt, daß Infrarotstrahlung mit einer Wellenlänge, bei der das Reflexionsvermögen von Schnee geringer als dasjenige der trockenen Fahrbahnoberfläche ist, auf die Fahrbahnoberflache eingestrahlt und das rückgestreute Licht mit Referenzsignalpegeln verglichen wird, die in bestimmter Weise vorab klassifizierten Zuständen der Fahrbahnoberfläche entsprechen.

Bei einem in der Patentschrift DE 38 41 333 C2 beschriebenen Verfahren wird zur Überwachung des Zustands einer Fahrbahn elektromagnetische Strahlung auf eine Lauffläche eines auf der Fahrbahn laufenden Rades eines Fahrzeugs eingestrahlt und die von dieser Lauffläche rückgestreute Strahlung analysiert.

In der Offenlegungsschrift DE 35 45 366 A1 ist eine Meßvorrichtung zur optischen Bestimmung der Dicke eines z.B. auf einer Metalloberfläche befindlichen Wasserfilms offenbart, bei dem auf den Wasserfilm Licht eingestrahlt wird, das einen Meßstrahl mit einer Wellenlänge, die vom Wasserfilm absorbiert wird, und einen Referenzstrahl mit einer Wellenlänge, die keiner Wasserabsorption unterworfen ist, beinhaltet. Die Wasserfilmdicke wird dann aus dem Verhältnis des den rückgestreuten Meßstrahlanteil repräsentierenden Meßsignalpegels zum den rückgestreuten Referenzstrahlanteil repräsentierenden Referenzsignalpegel multipliziert mit einem Temperaturkorrekturkoeffizienten ermittelt, wobei der Meßsignalpegel und der Referenzsignalpegel ggf. über mehrere Meßvorgänge gemittelt werden.

In der Offenlegungsschrift DE 40 40 842 A1 ist ein Infrarot-Mikrowellen-Sensorsystem zur Fahrbahnzustandserkennung, insbesondere zur Erkennung, ob die Fahrbahn trocken, naß oder vereist ist, beschrieben, das Netzwerke aus einem oder mehreren Komparatoren bzw. einem oder mehreren Gattern bzw. Flip-Flops zur Aufbereitung der Signale eines Infrarot- bzw. Mikrowellenempfängers enthält. Dabei wird die rückgestreute Intensität der elektromagnetischen Strahlung für zwei unterschiedliche Wellenlängen bzw. schmale Wellenlängenbänder ausgewertet und der Quotient dieser beiden Intensitäten bzw. von davon abgeleiteten Detektorsignalspannungen gebildet. Je nach Wert des ermittelten Quotienten wird auf eine trockene, nasse oder vereiste Fahrbahn geschlossen.

In der nichtvorveröffentlichten Patentanmeldung DE 197 36 138 ist ein Verfahren zur Bestimmung des Zustands einer Fahrbahnoberfläche offenbart, mit dem der Zustand einer Fahrbahnoberfläche insbesondere hinsichtlich Vorhandenseins von Wasser, Eis und/oder Schnee mit relativ geringem Aufwand sehr zuverlässig und genau sowie unabhängig vom Fahrbahnbelag bestimmt werden kann. Bei diesem Verfahren wird auf die Fahrbahnoberfläche Licht eingestrahlt, das mindestens einen ersten Lichtanteil aus einem ersten Wellenlängenbereich ohne signifikante Absorption durch Wasser oder Eis einschließlich Schnee und einen zweiten Lichtanteil aus einem zweiten Wellenlängenbereich mit signifikanter Absorption durch Wasser/Eis bzw. Schnee beinhaltet, wobei wenigstens der erste Lichtanteil Licht mehrerer unterschiedlicher Wellenlängen enthält. Mit der Bezeichnung "ohne signifikante Absorption" ist dabei gemeint, daß zwar eventuell eine gewisse geringe Absorption vorhanden sein kann, diese jedoch jedenfalls deutlich geringer ist als im Wellenlängenbereich mit signifikanter Absorption. Das von der Fahrbahnoberfläche rückgestreute Licht wird erfaßt und spektral ausgewertet. Dazu wird anhand der für einen ersten, zu den mehreren unterschiedlichen Wellenlängen des ersten Lichtanteils gehörigen Rückstreulichtanteil sich ergebenden Spektraldaten eine Näherungs-Referenzkurve ermittelt. Dies kann z.B. durch Bestimmung der Näherungs-Referenzkurve als einer parametrisierten Ausgleichskurve über die einzelnen Meßpunkte dieser Spektraldaten hinweg unter Verwendung einer üblichen Ausgleichsrechnung erfolgen. Die Näherungs-Referenzkurve erstreckt sich dabei über den gesamten Spektralverlauf des rückgestreuten Lichtes, also auch über den Wellenlängenbereich des zweiten Lichtanteils mit signifikanter Absorption durch Wasser/Eis, wobei sie ausgehend von den Meßpunkten im Wellenlängenbereich des ersten Lichtanteils ohne signifikante Wasser/Eis-Absorption in diesen Wellenlängenbereich des zweiten Lichtanteils hinein interpoliert bzw. extrapoliert ist.

Die Näherungs-Referenzkurve bildet auf diese Weise im Wellenlängenbereich des zweiten Lichtanteils eine Referenzkurve, die mindestens näherungsweise den Spektralverlauf des rückgestreuten Lichtes in diesem Wellenlängenbereich bei trockener Fahrbahnoberfläche wiedergibt. Bei nasser oder vereister Fahrbahn weichen folglich die Spektraldaten des rückgestreuten Lichtes im zweiten Wellenlängenbereich aufgrund einer entsprechenden Absorption des zweiten Lichtanteils durch das Wasser bzw. Eis merklich von der Näherungs-Referenzkurve ab. Dementsprechend sieht das Verfahren weiter vor, die Differenz zwischen den Spektraldaten des vom zweiten Lichtanteil stammenden, zweiten Rückstreulichtanteils und den entsprechenden Daten der Näherungs-Referenzkurve für wenigstens eine Wellenlänge des zweiten Wellenlängenbereichs zu ermitteln. Die so ermittelte Differenz wird, um unabhängig von der Gesamtlichtintensität zu werden, vorzugsweise auf die Gesamtlichtintensität oder auf die Anteile in den nicht absorbierenden Wellenlängenbereichen normiert und ist ein zuverlässiges qualitatives und auch quantitatives Maß für das Vorhandensein von Wasser oder Eis auf der Fahrbahnoberfläche.

Vorzugsweise liegen bei dem beschriebenen Verfahren der erste und der zweite Lichtanteil, die für die Auswertung des rückgestreuten Lichtes relevant sind, im Wellenlängenbereich zwischen etwa 800nm und etwa 1100nm. Dies hat den Vorteil, daß der Wellenlängenbereich ohne signifikante Wasser/Eis-Absorption sich aus zwei Teilbereichen unterhalb bzw. oberhalb des zweiten Wellenlängenbereichs zusammensetzt. Dadurch liegen beidseits des zweiten Wellenlängenbereichs Meßpunkte für die Ermittlung der Näherungs-Referenzkurve für den Spektralverlauf des rückgestrahlten Lichtes bei trockener Fahrbahn vor, wodurch dieser Spektralverlauf für den Wellenlängenbereich mit signifikanter Wasser/Eis-Absorption mit guter Genauigkeit interpoliert werden kann. Ein weiterer Vorteil ist, daß bei dem ausgewählen Wellenlängenbereich die Eindringtiefe des Lichtes ausreichend groß ist, um die typischerweise auf Verkehrswegen stehenden Wasser- oder Eisschichten vollständig durchdringen zu können. Weiterhin vorteilhaft ist, daß kostengünstige Silizium-Fotoempfänger als Rückstreulichtdetektoren eingesetzt werden können und keine speziellen Infrarot-Detektoren erforderlich sind.

Ein ähnliches Verfahren, wie das voranstehend geschilderte ist auch in der WO96/26430 offenbart. Darüberhinaus umfaßt die deutsche Patentanmeldung DE 197 36 138 eine Weiterbildung des Verfahrens, bei welchem auch der zweite Lichtanteil Licht mehrere unterschiedlicher Wellenlängen beinhaltet, und die Differenz zwischen den Spektraldaten des vom zweiten Lichtanteil stammenden Rückstreulichtanteils und den entsprechenden Daten der Näherungs-Referenzkurve nicht nur an einem einzelnen Punkt, sondern an entsprechend vielen Punkten als Differenzkurve ermittelt wird. Aus dem Verlauf der Differenzkurve läßt sich der Zustand der Fahrbahnoberfläche vergleichsweise genau qualitativ und quantitativ bestimmen. Zu diesem Zweck wird u.a. das Integral der Differenzkurve über den zweiten Wellenbereich ermittelt. Das resultierende, vorzugsweise normierte Integral bildet ein sehr genaues Maß für die Dicke eines ggf. auf der Fahrbahnoberfläche gebildeten Wasserfilms. In einer weiteren Ausgestaltung wird der Schwerpunkt der Differenzkurve ermittelt. Es zeigt sich, daß durch diese Kenntnis der Schwerpunktlage entschieden werden kann, ob es sich bei einem auf der Fahrbahnoberfläche befindlichen Belag um eine Wasser- oder eine Eis/Schnee-Schicht handelt. Für den Fall von Schnee sieht die Differenzkurve ähnlich aus wie für Eis, jedoch mit geringerer Amplitude, so daß eine zusätzliche Diskriminierung zwischen Eis und Schnee möglich ist.

Da mit abnehmender Temperatur der Wasser- bzw. Eisschicht sich die Schwerpunktslage der Differenzkurve zu größeren Wellenlängenlängen hin verschiebt, kann aus der Verschiebung auf die Temperatur der Wasser- bzw. Eisschicht geschlossen werden. Die Kenntnis der Temperatur der Wasser- bzw. Eisschicht gibt neben der Kenntnis der Schichtdicke wertvolle Hinweise, um die Gefahr durch Eisglätte einschätzen zu können. Ist auf der Fahrbahn Wasser vorhanden und nähert sich die Wassertemperatur dem Gefrierpunkt, so kann der Fahrer rechtzeitig davor gewarnt werden, daß mit überfrierender Nässe zu rechnen ist.

Nachteilig an dem dargestellten Verfahren zur Bestimmung des Zustands einer Fahrbahnoberfläche ist, daß es notwendig voraussetzt, daß oberhalb, bzw. unterhalb der Absorptionswellenlänge von Wasser/Eis Bereiche vorhanden sind, in denen keine Absorption stattfindet und die zur Referenzbildung herangezogen werden können, um den Einfluß des Fahrbahnbelags zu kompensieren. Diese Voraussetzung ist nicht immer erfüllbar, insbesondere bei größeren Wellenlängen, oberhalb von 1100 nm lassen sich Bereiche ohne signifikante Absorption durch Wasser/Eis nicht mehr isolieren, so daß dort eine Referenzkurve nicht gebildet werden kann.

Der Erfindung liegt als technisches Problem die Bereitstellung eines Verfahrens zur Bestimmung des Zustands einer Fahbahnoberfläche zugrunde, mit dem der Zustand einer Fahrbahnoberfläche insbesondere hinsichtlich Vorhandenseins von Wasser, Eis und/oder Schnee mit relativ geringem Aufwand sehr zuverlässig, genau und unabhängig vom Fahrbahnbelag bestimmt werden kann, wobei die zuvor genannten Einschränkungen vermieden werden sollen.

Die Erfindung löst diese Aufgabe durch die Bereitstellung eines ersten, speziellen Verfahrens mit den Merkmalen des Anspruchs 1.

Gemäß dem ersten erfindungsgemäßen Verfahren nach Anspruch 1 wird das rückgestreute Licht in Spektralkomponenten zerlegt und der so erhaltene wellenlängenabhängige Verlauf der Rückstreuintensität ausgewertet. Dazu wird das wellenlängenabhängige Rückstreulichtspektrum einer trockenen Fahrbahnoberfläche (Fahrbahnstreukoeffizient) mit einer mathematischen Funktion mit freien Parametern angesetzt und diese Funktion mit einem exponentiellen Absorptionsterm, der die Lichttransmission einer Wasserschicht bestimmter Dicke beschreibt, multipliziert, um eine mathematische Funktion für den wellenlängenabhängigen Verlauf der Rückstreuintensität zu erhalten, wie sie auf den Empfänger trifft. Bei der Modellierung der Absorptionskurven von Wasser bzw,. Eis, welche in den Absorptionsterm eingehen, können in vorteilhafter Weise die tatsächlichen Absorptionskurven von Wasser bzw. Eis zugrundegelegt werden. Anhand der tatsächlichen Meßwerte können dann die freien Parameter der Funktion im Sinne einer bestmöglichen Approximation errechnet werden, woraus sich u.a. die Dicke der Wasserschicht ergibt.

Das zweite erfindungsgemäßen Verfahren nach Anspruch 2 läßt sich dahingehend charakterisieren, daß die Information über das rückgestreute Licht nicht spektral vorliegen muß, sondern daß mehrere Detektoren mit unterschiedlicher spektraler Empfindlichkeit verwendet werden können. Deren umgewandelte Lichtintensität ergibt sich als Integral der Wellenlänge über das Produkt der spektralen Empfindlichkeit des jeweiligen Detektors mit der spektralen Rückstreuintensität des Lichtes. Die Rückstreuintensität wird wie beim Verfahren nach Anspruch 1 durch eine mathematische Funktion mit freien Parametern modelliert. Unter der gerechtfertigten Annahme, daß die Beiträge der Detektoren voneinander linear unabhängig sind, liefert jeder Beitrag eine Gleichung für ein Gleichungssystem, welches zur Bestimmung der Modellparameter herangezogen werden kann. Die Auswertung vereinfacht sich, wenn $\delta$-Funktionen für die spektrale Empfindlichkeit der Detektoren verwendet werden, d.h. wenn der Spektralverlauf punktuell bei verschiedenen diskreten Wellenlängen ausgewertet wird. In diesem Fall ergibt sich das Verfahren nach Anspruch 1.

Das zweite erfindungsgemäße Auswerteverfahren hat den weiteren Vorteil, daß es auch anwendbar ist, wenn die spektrale Information des rückgestreuten Lichtes nur indirekt erfaßt wird. Insbesondere ist das Verfahren anwendbar auf eine Meßanordnung mit breitbandiger Lichtquelle und breitbandigen Detektoren mit jeweils unterschiedlichen spektralen Empfindlichkeiten. In diesem Fall liegen die Informationen über den Kurvenverlauf bei trockener Fahrbahn und den absorptionsbedingten Einbruch des Spektralverlaufs des rückgestreuten Lichts immer gemischt in den Empfängersignalen vor.

In vorteilhaften Ausgestaltungen der beiden erfindungsgemäßen Verfahren können Störeinflüsse durch Umgebungslicht rechnerisch eliminiert werden, indem spektrale Unterscheidungsmerkmale zwischen Umgebungslicht und Sensorlicht ausgenutzt werden. Dies bietet einen Vorteil gegenüber anderen bekannten Verfahren, bei denen eine gepulste Lichtquelle (Chopper) verwendet werden muß, um den Einfluß von Umgebungslicht zu eliminieren.

Die erfindungsgemäße Vorrichtung stellt in einer besonders vorteilhaften Ausgestaltung ein Spektrometer dar, welches nicht nur zur Straßenzustandserkennung sondern für alle Anwendung eingesetzt werden kann, bei denen eine Spektrum gemessen werden muß. Gegenüber bekannten Spektrometern, wird anstelle eines dispersiven Elementes ein absorbierendes Element verwendet, welches unmittelbar auf eine CCD-Sensorzeile aufgebracht ist. In einer bestimmten Ausprägung des absorbierenden Elementes kann unter Verwendung einer Fourierrücktransformation aus den gemessenen Intensitäten die spektrale Zusammensetzung des Lichtes bestimmt werden.

Vorteilhafte Ausführungsformen der Erfindung sind in den Zeichnungen dargestellt und werden nachfolgend beschrieben. Hierbei zeigen:

Fig. 1   eine schematische Blockdiagrammdarstellung einer ersten Vorrichtung zur Durchführung des erfindungsgemäßen Verfahrens zur Bestimmung des Zustands einer Fahrbahnoberfläche,

Fig. 2   eine schematische Blockdiagrammdarstellung der Empängerseite einer zweiten Vorrichtung zur Durchführung des erfindungsgemäßen Verfahrens zur Bestimmung des Zustands einer Fahrbahnoberfläche,

Fig. 3   der typische Verlauf der spektralen Intensität im Infrarotbereich von Umgebungslicht (UL) und von Licht einer Lichterzeugungseinheit (SL),

Fig. 4   die Transmissionskurven von absorbierendem Farbglas verschiedener Dicke D.

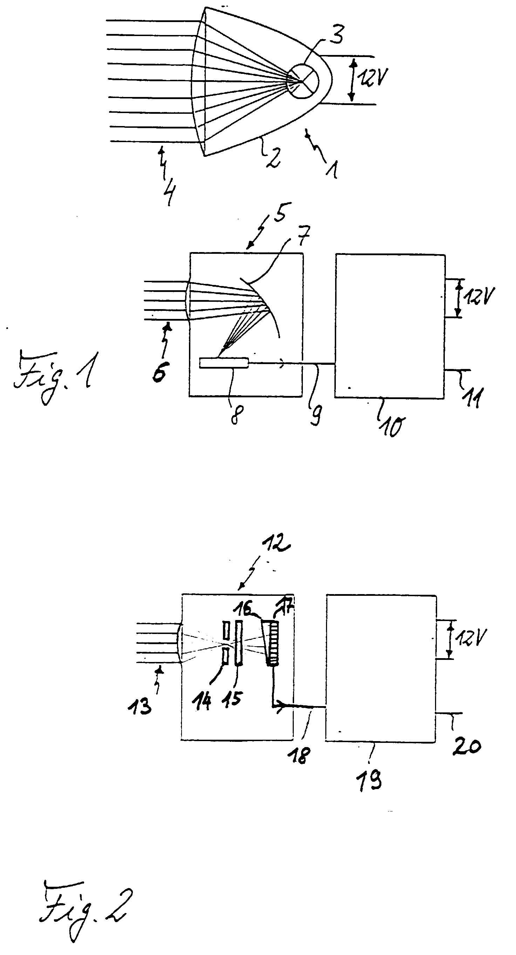

Fig. 1 zeigt eine zur Durchführung der Verfahren, insbesondere des Verfahrens nach Anspruch 1 geeignete Vorrichtung. Diese umfaßt eine Lichterzeugungseinheit 1 (Sensorlicht) mit einer in Brennpunktnähe eines Reflektors 2 angeordneten Lichtquelle 3, die von einer 12V-Speisespannung, z.B. aus einem Bordnetz eines Kraftfahrzeuges, gespeist wird und breitbandig Licht in einem bestimmten Wellenlängenbereich abgibt. Der Bereich zwischen etwa 800nm und etwa 1150nm bietet den Vorteil, daß kostengünstige Si-Detektoren eingesetzt werden können. Das emittierte Licht verläßt den Reflektor 2 als ein Bündel 4 von im wesentlichen parallelen Lichtstrahlen, das auf eine nicht gezeigte Fahrbahnoberfläche eingestrahlt wird. Ein Empfänger 5 empfängt das zu ihm von der Fahrbahnoberfläche rückgestreute Licht 6 über eine Optik und/oder Lichtleiter, von wo es auf ein dispersives Element 7 des Empfängers 5 fällt und auf diese Weise spektral zerlegt auf einen Silizium-Photoempfänger in Form einer CCD-Sensorzeile 8 reflektiert wird. Das dispersive Element 7 kann z.B. von einem Beugungsgitter, einem Interferenzfilter oder einem Prisma gebildet sein. Das Ausgangssignal 9 der CCD-Zeile 8 wird einer Auswerteeinheit 10 zugeführt, die ebenfalls von der 12V-Speisespannung gespeist wird und an einen Datenbus 11, z.B. einen CAN-Bus, angeschlossen ist.

Die Auswerteeinheit 10 ist in geeigneter Weise zur Auswertung des Ausgangssignals 9 der CCD-Zeile 8 gemäß dem erfindungsgemäßen Verfahren nach Anspruch 1 ausgelegt. Jedes Pixel, d.h. jede Abtast-Einheitszelle der CCD-Zeile 8 empfängt vom dispersiven Element 7 Rückstreulicht einer jeweils zugehörigen Wellenlänge bzw. einer zugehörigen schmalen Spektrallinie. Der Beitrag jedes solchen Pixels zum Ausgangssignal 9 entspricht somit der rückgestreuten Lichtintensität bei der betreffenden Wellenlänge. Auf diese Weise vermag die Auswerteeinheit 10 für die verschiedenen Meßwellenlängen aus den Signalen der betreffenden Pixel der CCD-Zeile 8 die zugehörige Rückstreuintensität zu ermitteln.

Im einzelnen ergibt sich dabei folgender Verfahrensablauf. Die Auswerteeinheit 10 nimmt zunächst die Spektraldaten des rückgestreuten Lichtes in Form von Meßwerten entsprechend dem Ausgangssignalbeitrag des jeweiligen CCD-Zeilenpixels, in Abhängigkeit von der Wellenlänge $\lambda$ für ein bestimmte Anzahl von Meßpunkten entsprechend der Anzahl von CCD-Zeilenpixeln auf.

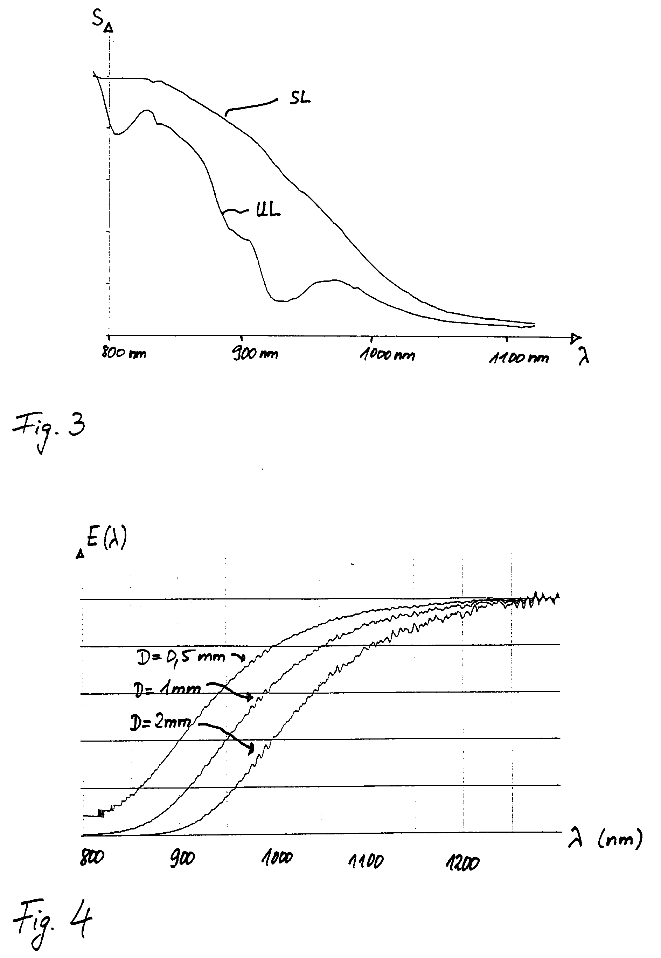

Das Auswerteverfahren ist u.a. dahingehend ausgelegt, daß mögliche Störeinflüsse durch Umgebungslicht kompensiert werden. Erfindungsgemäß erfolgt die Trennung zwischen Umgebungslicht und Sensorlicht aufgrund der spektralen Unterscheidungsmerkmale auf rein rechnerischem Wege. In Fig. 3 sind die typischen spektralen Verläufe im Infrarotbereich von Umgebungslicht (UL) und von Licht einer Lichterzeugungseinheit (SL) dargestellt. Messungen zeigen, daß sich das Umgebungslichtspektrum im Verlauf des Tages wenig ändert. Die ausgeprägten Unterschiede der Spektren (UL, SL) ermöglichen eine zuverlässige Anwendung des im folgenden beschriebenen Verfahrens.

Dazu werden zwei Referenzspektren aufgenommen, und zwar eines $S_1(\lambda)$ für Tageslicht bei abgeschalteter Lichterzeugungseinheit, d.h. ohne Sensorlicht und das andere $S_0(\lambda)$ bei fehlendem Umgebungslicht und aktivierter Lichterzeugungseinheit, jeweils für einen bestimmten Referenz-Fahrbahnbelag.

Messungen zeigen, daß sich der Verlauf des spektralen Reflexionsvermögens für verschiedene Fahrbahnbeläge in sehr guter Näherung durch monotone, stetig verlaufende Kurven beschreiben läßt, die durch Multiplikation mit einer geeigneten Funktion $P(\lambda, A, B, ...)$ mit bestimmten Parametern A, B, ... ineinander übergeführt werden können. Unter dieser Annahme ergibt sich das an einem beliebigen Fahrbahnbelag gemessene Rückstreulichtspektrum aus dem Produkt der parameterabhängigen Funktion $P(\lambda, A, B, ...)$ mit der Summe aus einem Bruchteil des ersten Referenzspektrums $S_0(\lambda)$ und einem Bruchteil des zweiten Referenzspektrums $S_1(\lambda)$.

Die so erhaltenen Funktion für das Rückstreulichtspektrum einer trockenen beliebigen Fahrbahn wird mit einem exponentiellen Absorptionsterm $T(\lambda, d)= exp(- \alpha(\lambda)d)$ multipliziert, der die Lichttransmission einer Wasserschicht bestimmter Dicke d beschreibt, wobei $\alpha(\lambda)$ der wellenlängenabhängige Absorptionskoeffizient von Wasser bzw. Eis ist. Der Absorptionskoeffizient $\alpha(\lambda)$ hat einen bekannten Verlauf, welcher entweder in einem Speicher abgelegt sein kann oder bereichsweise durch analytische Funktionen, wie Gauß- oder Lorentzkurven angenähert werden kann. Da sich das Absorptionsspektrum bekanntermaßen mit sich dem Gefrierpunkt nähernden Temperaturen zu höheren Wellenlängen hin verschiebt, ist es vorteilhaft als weiteren anzupassenden Parameter in den Näherungskurven für $\alpha(\lambda)$ die Temperatur t einzuführen oder die Kurven für $\alpha(\lambda)$ auch nach der Temperatur zu parametrisiert abzulegen.

Um auch den Fall einer Wasserschicht auf Eis oder eines Eiswassergemisches erfassen zu können, könnte ein weiterer Parameter für den Eisanteil eingeführt werden, welcher festlegt in welchem Maß die Absorptionskurven von Wasser bzw. Eis in das mathematische Modell für den Absorptionsterm $T(\lambda)$ eingehen.

Insgesamt ergibt sich eine mathematische Funktion für den wellenlängenabhängigen Verlauf der Rückstreuintensität der Form:

$$S(\lambda) = (a\, S_0(\lambda) + b\, S_1(\lambda))\, P(\lambda), A, B, C...)\, T(\lambda, d, t),$$

a und b sind hierbei die Anteile des Sensorlichts bzw. des Umgebungslichts, wobei a + b = 1 gilt. Auf einen Parameter für den Eisanteil wurde hier der Einfachheit halber verzichtet.

Anhand der tatsächlichen Meßwerte können die freien Parameter der Funktion für die Rückstreuintensität $S(\lambda)$ im Sinne einer bestmöglichen Approximation errechnet werden, woraus sich u.a. die Dicke d der Wasserschicht ergibt. Ist n die Gesamtzahl der Parameter in $P(\lambda, A, B, C...)$, so kann durch Messung bei n+3 unterschiedlichen Wellenlängen $\lambda_i$ ein Gleichungssystem mit n+3 Gleichungen aufgestellt werden, das sich je nach Wahl der Funktion P exakt oder näherungsweise lösen läßt. Somit können die Parameter A, B, ... sowie die Dicke d der Wasserschicht, die Wassertemperatur t und der Bruchteilsfaktor a/b errechnet werden, mit dem die beiden Referenzspektren beitragen. Ist die Anzahl der Messungen > n+3, so ist das Gleichungssystem überbestimmt. Mit Hilfe einer Ausgleichsrechnung kann in diesem Fall die bestangepaßte Lösung gefunden werden, wodurch der Einfluß des Signalrauschens verringert und die Genauigkeit erhöht werden kann.

Ein vereinfachtes Verfahren bietet sich an, wenn der Bruchteilsfaktor a/b in einem Wellenbereich ohne signifikante Wasser/Eis-Absorption bestimmt wird. In den Wellenlängenbereichen ohne signifikante Wasserabsorption ist die Transmission T ($\lambda$, d) = 1 und die obige Gleichung für die Rückstreuintensität vereinfacht sich zu:

$$S(\lambda) = (a\, S_0(\lambda) + b\, S_1(\lambda))\, P(\lambda, A, B, C...)$$

Diese Gleichung muß für alle Wellenlängen aus den Bereichen ohne Wasserabsorption erfüllt sein. Mit ausreichend vielen Meßpunkten im Wellenlängenbereich ohne signifikante Wasser/Eis-Absorption lassen sich die Parameter a, b, A, B, C... so bestimmen, daß die Quadratsumme der Abweichungen zur gemessenen Spektralkurve S($\lambda$) über alle Wellenlängen minimal ist. Durch diese Ausgleichsrechnung wird die am besten aproximierende, parameterabhängige Funktion P sowie der Bruchteilsfaktor a/b errechnet, mit dem die beiden Referenzspektren zur oben genannten Summe beitragen.

Da nun alle Parameter bekannt sind, läßt sich die Funktion P($\lambda$, A, B, C...) in den Bereich hinein interpolieren, in dem Absorption stattfindet. Mit dieser Kalibrierung des Meßsystems können die Rückstreuintensitäten für Meßpunkte im Wellenlängenbereich mit signifikanter Wasser/Eis-Absorption bei trockenem Fahrbahnoberflächenzustand als Interpolations- bzw. Extrapolationspunkte angegeben werden. Diese interpolierte Kurve entspricht der Messkurve für eine trockene Fahrbahn.

In einer ersten Variante, wie sie in der Patentanmeldung DE 197 36 138 ausgeführt ist, wird im einem nächsten Schritt die Differenz zur tatsächlichen Meßkurve bestimmt. Aus der Größe der Differenzfläche und der Lage des Schwerpunkts kann die Wasserhöhe, die Wassertemperatur und das Vorhandensein von Eis ermittelt werden.

In einer zweiten Variante können die im Bereich ohne Wasserabsorption ermittelten Funktion P und der Bruchteilsfaktor a/b in die obige Gesamtformel für S($\lambda$) eingesetzt werden, so daß die Ausgleichsrechnung für die Meßpunkte im Bereich nicht signifikanter Wasser/Eis-Absorption mit einer reduzierten Anzahl von Parametern durchgeführt werden kann, bei der lediglich die freien Parameter des Absorptionsterms T($\lambda$, d, t) anzupassen sind. Aus der Anpassung ergibt sich dann die Wasserschichtdicke d und die Wassertemperatur t.

In einer dritten Variante wird allein der im Bereich ohne Wasserabsorption ermittelte Bruchteilsfaktor a/b übernommen, während die parameterabhängige Funktion P($\lambda$, A, B, C...) zusammen mit dem Absorptionsterm T($\lambda$, d, t) wieder im Sinne einer bestmöglichen Approximation errechnet werden, woraus sich u.a. die Dicke d der Wasserschicht und die Wassertemperatur t ergibt.

Die Möglichkeit auch die Wasser- bzw. Eistemperatur im gleichen Auswerteverfahren zu bestimmen, bietet den Vorteil, daß mit der Temperatur eine vorausschauende Warnung abgeleitet werden kann: Ist auf der Fahrbahn Wasser vorhanden und nähert sich diese Temperatur dem Gefrierpunkt, so kann der Fahrer rechtzeitig davor gewarnt werden, daß mit überfrierender Nässe zu rechnen ist.

Zur Unterstützung des Verfahrens der Trennung zwischen Umgebungslicht und Sensorlicht können auch die Signale eines Umgebungslichtsensors verwendet werden, wie er in Fahrzeugen bereits verwendet wird, oder eines Sensors, der die Farbtemperatur des Umgebungslichts bestimmt, wie er aus WO 97/27077 bekannt ist. Solche Sensoren werden in Fahrzeugen zur automatischen Lichteinschaltung bei Dunkelheit und Schlechtwetter eingesetzt. Mittels eines Umgebungslichtsensors kann der Bruchteilsfaktor a/b laufend sensoriell ermittelt und in die oben ausgeführten Auswertung eingespeist werden.

Da das erfindungsgemäße Verfahren prinzipiell unabhängig davon ist, in welchem Verhältnis sich das rückgestreute Licht aus Anteilen gestreuten Umgebungslichtes bzw. gestreuten Sensorlichtes der Lichtquelle zusammensetzt, brauchen keine weiteren Maßnahmen zur Abschirmung gegenüber Umgebungslicht vorgenommen werden. Insbesondere sind auch Messungen durchführbar, die nur unter Tageslicht erfolgen. Dies hat auch den Vorteil, daß die Messung vorausschauend erfolgen kann, wobei das Streulicht eines vom Umgebungslicht ausgeleuchteten Bereichs vor dem Fahrzeug sensoriell erfaßt und ausgewertet wird. In vorteilhafter Weise kann auf eine separate Lichtquelle (Sensorlicht) verzichtet werden. Bei Nacht und in der Dämmerung kann zur Messung das Scheinwerferlicht des Fahrzeugs ausgenutzt werden, so daß hier eine intensive Lichtquelle hoher Reichweite zur Verfügung steht. Selbstverständlich kann in dieser Ausgestaltung die Vorgabe der Parameter a und b, welche die Anteile des Sensorlichts bzw. des Umgebungslichtes angeben, auch in Abhängigkeit von der Aktivierung des Scheinwerferlichtes dem Auswerteverfahren vorgegeben werden, wobei hier das Scheinwerferlicht an die Stelle des Sensorlichtes tritt.

Mit Verfahren, die in Reflexion arbeiten, wie sie in der WO 96/26430 erwähnt sind, ist eine vorausschauende Fahrbahnzustandserkennung prinzipiell nicht möglich, da die durch das Reflexionsgesetz gegebenen Winkelverhältnisse nicht eingehalten werden können.

Das in Fig. 1 beschriebene konventionellen Spektrometer kann zu einem abbildenden Spektrometer weitergebildet werden, bei dem jedem Punkt eines Eingangsspalts eindeutig abgebildet wird auf eine das Spektrum aufnehmende Spalte oder Zeile in der Detektorebene. Der Detektor muß in diesem Fall ein zweidimensionales Dioden- oder CCD-Array sein. Dies ermöglicht eine räumlich eindimensional ortsaufgelöste Messung mit der z.B. eine ortsaufgelöste Auswertung des Fahrbahnzustandes über die gesamte Fahrbahnbreite durchgeführt werden kann. Alternativ können optische Signale, die von verschiedenen Meßpunkten am Fahrzeug, insbesondere von Meßpunkten in der Nähe der Räder kommen und über Lichtleiter zum Spektrometer geführt werden, in einem Gerät unabhängig voneinander analysiert werden.

Bei einer spektrometrischen Meßanordnung, wie in Fig. 1 dargestellt, wird das von der Fahrbahn zurückgestreute Licht spektral zerlegt und das Spektrum auf eine Dioden- oder CCD-Zeile abgebildet. Hierbei sieht jedes einzelne Pixel einen sehr eng begrenzten Wellenlängenbereich. Nachteilig sind bei diesem Verfahren die hohen Kosten für das Spektrometer.

Alternativ zu einer Spektrometer mit einem z.B. Interferenzfilter als dispersivem Element können auch Detektoren unterschiedlicher spektraler Empfindlichkeit eingesetzt werden. Dies können Photodioden sein, die eine unterschiedliche spektrale Empfindlichkeit aufweisen, z.B. aus Si, Ge oder InGaAs oder deren spektrale Empfindlichkeit durch breitbandige Filter modifiziert wird. Eine kostengünstige Lösung bietet die Verwendung von Filtern, die z.B. aus Farbgläsern oder Kunststoffen bestehen können und die in dem zu untersuchenden Wellenlängenbereich typische Absorptions- und Durchlaßeigenschaften zeigen. Werden für den Empfänger mehrere Detektoren mit unterschiedlichen Filtern verwendet, so enthalten die einzelnen Signale voneinander unabhängige Informationen über den spektralen Verlauf des Eingangslichts.

Da bei diesen Meßanordnungen das Licht nicht spektral zerlegt wird, ist hier das oben dargestellte, erste erfindungsgemäße Auswerteverfahren nicht anwendbar. Im folgenden wird daher ein zweites Verfahren bereitgestellt, welches für Meßanordnungen anwendbar ist, bei denen das Licht nicht spektral zerlegt wird.

Die von einem solchen Detektor i insgesamt umgewandelte Lichtintensität $I_i$ ergibt sich als Integral der Wellenlänge über eine Produktfunktion aus der spektralen Empfindlichkeit $E_i(\lambda)$ des Photodetektors und der wellenlängenabhängigen Rückstreuintensität $S(\lambda)$:

$$I_i = \int E_i(\lambda)\, S(\lambda)\, d\lambda.$$

Je nach Verlauf der Empfindlichkeitskurven $E_i(\lambda)$ wirkt sich die Wasserabsorption unterschiedlich auf die einzelnen Detektoren i aus.

Bei der Auswertung gemäß dem zweiten erfindungsgemäßen Verfahren wird nun die wellenlängenabhängige Rückstreuintensität $S(\lambda)$ wie beim ersten erfindungsgemäßen Verfahren angesetzt als parameterabhängige Funktion $S(\lambda, A, B, ...)$, welche sich wiederum als Produkt aus einem exponentiellen Absorptionsterms und einer den wellenlängenabhängigen Streukoeffizient einer trockenen Fahrbahnoberfläche beschreibenden Funktion ergibt.

Durch Verwenden einer entsprechend großen Anzahl von Detektoren mit voneinander linear unabhängigen spektralen Empfindlichkeitsverläufen $E_i(\lambda)$ erhält man dann wiederum ein Gleichungssystem, aus dem die freien Parameter, die Wasserdicke, die Wassertemperatur etc. bestimmt werden können. Vorzugsweise ist auch hier wieder die Anzahl der Meßpunkte größer als die Anzahl von Detektoren, so daß das Gleichungssystem überbestimmt ist und durch eine Ausgleichsrechnung der Einfluß des Signalrauschens verringert und die Genauigkeit erhöht werden kann.

Die Fig. 2 zeigt eine erfindungsgemäße Vorrichtung, welche u.a. zur Durchführung des zuvor beschriebenen erfindungsgemäßen Verfahrens geeignet ist.

Eine Lichterzeugungseinheit, welche ein breitbandiges, paralleles Lichtbündel im Infrarotbereich abgibt und die Fahrbahnoberfläche zu Meßzwecken ausleuchtet ist nicht eigens dargestellt, sie kann ähnlich ausgebildet sein wie in Fig. 1 dargestellt. Die Wahl eines Wellenlängenbereiches zwischen etwa 800nm und etwa 1150nm bietet den Vorteil, kostengünstige Si-Detektoren einsetzen können. Ein Empfänger 12 empfängt das zu ihm von der Fahrbahnoberfläche rückgestreute Licht 13 über eine Optik und/oder Lichtleiter. Dieses Licht 13 setzt sich zusammen aus von der Fahrbahnoberfläche rückgestreutem Licht der Lichterzeugungseinheit (Sensorlicht) und rückgestreutem Umgebungslicht. Das Licht 13 wird mittels einer Lochblende 14 und einer Zylinderlinderlinse 15 als Querschnittswandler auf einen Silizium-Photoempfänger in Form einer CCD-Sensorzeile 17 möglichst gleichmäßig verteilt abgebildet. Jedes Zeilenpixel der Sensorzeile 17 ist mit einem breitbandigem Filter versehen, welches das Licht vor Auftreffen auf das Zeilenpixel passieren muß. Die spektralen Empfindlichkeiten der den Pixel zugeordneten Filter sind dabei voneinander linear unabhängig gewählt.

Vorzugsweise wird das breitbandige Filter vor jedem Pixel durch ein Absorptionsfilter gebildet, dessen Absorptionseigenschaft von der Filterdicke abhängig ist. Solche Absorptionsfilter bestehen aus Kunststoff oder Glas, ein typisches Beispiel ist ein Farbglas mit der Bezeichnung RG 1000. Erfindungsgemäß werden die den Pixeln zugeordneten Absorptionsfilter zu einem sich über die Sensorzeile 17 erstreckenden Absorptionszeilenfilter 16 zusammengefaßt, dessen Filterdicke über die Sensorzeile in der Weise variiert, daß jedem Pixel eine Filterdicke und damit eine spektrale Empfindlichkeitskurve umkehrbar eindeutig zugeordnet ist. In einer bevorzugten Ausführungsform ist das Absorptionszeilenfilter 16 keilförmig als Farbglaskeil ausgebildet.

Das Ausgangssignal 18 der CCD-Zeile 17 wird einer Auswerteeinheit 19 zugeführt, die von einer 12V-Speisespannung gespeist wird und an einen Datenbus 20, z.B. einen CAN-Bus, angeschlossen ist. Die Auswerteeinheit 19 ist in geeigneter Weise zur Auswertung des Ausgangssignals 18 der CCD-Zeile 17 gemäß dem erfindungsgemäßen Verfahren ausgelegt.

Im einzelnen ergibt sich dabei folgender Verfahrensablauf. Jedes Pixel, d.h. jede Abtast-Einheitszelle der CCD-Zeile 17 empfängt Rückstreulicht, welches durch das zugeordnete Absorptionsfilter mit zugeordneter Filterkurve in seiner spektralen Verteilung modifiziert ist. Der Beitrag jedes solchen Pixels i zum Ausgangssignal 18 entspricht der insgesamt umgewandelten Lichtintensität $I_i$ und ergibt sich rechnerisch wie oben bereits angegeben wurde, als Integral der Wellenlänge $\lambda$ über der spektralen Empfindlichkeit $E_i(\lambda)$ des dem Pixel i zugeordneten Absorptionsfilters multipliziert mit der wellenlängenabhängigen Rückstreuintensität $S(\lambda)$.

Für die spektralen Empfindlichkeit $E_i(\lambda)$ von homogenen Absorptionsfiltern gilt das Transmissionsgesetz

$$E_i(\lambda) = \exp(-\alpha_F(\lambda)D_i),$$

wobei $D_i$ die Filterdicke am Ort des Pixels i und $\alpha_F(\lambda)$ der allein vom Filtermaterial abhängige Absorptionskoeffizient ist.

Die Auswerteeinheit 19 kann nun aus den Ausgangssignalen der Pixel der CCD-Zeile 17, bei hinreichend großer Anzahl von Zeilenpixeln, das oben ausgeführte zweite Verfahren zur Bestimmung des Zustandes einer Fahrbahnoberfläche durchführen, bei dem die Rückstreuintensität als parameterabhängige Funktion $S(\lambda, A, B, ...)$ angesetzt und die gemessenen Intensitäten $I_i$ zur Bestimmung der interessierenden Parameter herangezogen werden.

In einer vorteilhaften Ausgestaltung der erfindungsgemäßen Vorrichtung wird ein Filtermaterial gewählt, bei dem zwischen dem Logarithmus des Absorptionskoeffizienten und der Wellenlänge ein linearer Zusammenhang

$$\ln \alpha_F(\lambda) = a \lambda + b$$

besteht. Dies ist für viele typische Filtermaterialien, wie z.B. auch für das Farbglas RG 1000 erfüllt. Dieser Zusammenhang führt zu einem allgemeinen Verschiebungsgesetz

$$E(\lambda, D) = E(\lambda+\lambda_0, D_0), \qquad \text{mit } \lambda_0 = \ln (D /D_0 ) / a,$$

demzufolge eine Änderung der Filterdicke D eine Verschiebung der Transmissionskurve $E(\lambda)$ im Wellenlängenbereich bewirkt, ohne jedoch deren Verlauf zu ändern.

In Fig. 4 sind Transmissionkurven $E(\lambda, D)$ für 3 Filterdicken D dargestellt.

Für die insgesamt ein Filter der Dicke D passierende und auf einen Detektor auftreffende Gesamtintensität I(D) ergibt sich mit dem Verschiebungsgesetz die Umformung:

$$I(D) = \int E(\lambda, D)S(\lambda)d\lambda = \int E(\lambda+\lambda_0, D_0)S(\lambda)d\lambda = \hat{I}(\lambda_0).$$

Dies bedeutet, daß nach Durchgang eines Filters der Dicke D die Gesamtintensität I(D) darstellbar ist, als ein Faltungsintegral über die Streuintensität $S(\lambda)$ mit einem Faltungskern, welcher die spektrale Empfindlichkeit des Filters bei einer Referenzdicke $D_0$ beschreibt. Die Gesamtintensität kann als Funktion $\hat{I}(\lambda_0)$ der Variable $\lambda_0$, welche mit der Dicke D durch die weiter oben aufgeführte Formel in Zusammenhang steht, aufgefaßt werden.

Werden nun ein Vielzahl von Detektoren mit Filtern jeweils bestimmter Dicke bzw. $\lambda_0$ verwendet, so gewinnt man aus der Gesamtheit der gemessenen Intensitäten die Faltungskurve des zu messenden Spektrums mit der Transmissionskurve des Filters.

Es existieren bekannte mathematische Verfahren, um aus einer solchen Faltungskurve bei bekannter Transmission das ursprüngliche Spektrum zurückzugewinnen, z.B. über Fouriertransformationen. Bei einer Fouriertransformation geht das Faltungsintegral im Fourierraum in ein Produkt über. Die Gleichung ist daher im Fourierraum algebraisch nach der Fouriertransformierten der Streuintensität S auflösbar. Diese ergibt sich dann als Quotient aus der Fouriertransformierten der gemessenen Gesamtintensität I und der Fouriertransformierten der Transmissionskurve E. Durch eine Fourierrücktransformation kann daher aus der Gesamtheit der gemessenen Intensitäten I bei unterschiedlichen Dicken bzw. $\lambda_0$ das Spektrum $S(\lambda)$ rekonstruiert werden.

Die erfindungsmäße Vorrichtung stellt in dieser Ausgestaltung ein Spektrometer dar, welches nicht nur zur Straßenzustandserkennung sondern für alle Anwendung eingesetzt werden kann, bei denen eine Spektrum gemessen werden muß. Gegenüber bekannten Spektrometern, wird anstelle eines dispersiven Elementes ein absorbierendes Element verwendet, was den Vorteil mit sich bringt, daß es unmittelbar auf die CCD-Sensorzeile aufgebracht werden kann. Der Aufwand für die erforderliche Fourierrücktransformation kann als gering erachtet werden, da dieses eine Standardoperation ist, welche durch handelsübliche Mikroprozessoren bereitgestellt wird. Insgesamt stellt die erfindungsgemäße Vorrichtung damit eine vorteilhafte Alternative zu handelsüblichen Spektrometern dar.

Die auf diese Weise gemessenen Spektren können nach beiden beschriebenen Verfahren zur Auswertung der Rückstreuintensität S($\lambda$) ausgewertet werden, insbesondere auch nach dem Verfahren wie es in der Patentanmeldung DE 197 36 138 beschrieben ist.

Denkbar sind jedoch auch Auswertungen die z.B. das Differenzieren der Kurve S($\lambda_0$), oder deren direkte Auswertung mit heuristischen Ansätzen einbeziehen.

Auch die oben beschriebene Vorrichtung mit einem absorbierenden Element wie einem Farbglaskeil kann, ähnlich wie in Zusammenhang mit der Fig. 1 beschrieben, weitergebildet werden, um eine ortsaufgelöste Messung zu ermöglichen, wenn anstelle einer Dioden- oder CCD-Zeile ein zweidimensionales Array verwendet wird.

**Patentansprüche**

1. Verfahren zur Bestimmung des Zustands einer Fahrbahnoberfläche, bei dem

   - auf die Fahrbahnoberfläche Licht eingestrahlt wird und
   - das von der Fahrbahnoberfläche rückgestreute Licht in Spektralkomponenten zerlegt und spektral ausgewertet und daraus auf den Zustand der Fahrbahnoberfläche wenigstens hinsichtlich Vorhandenseins von Wasser/Eis geschlossen wird,
     **dadurch gekennzeichnet, daß**
   - zur spektralen Auswertung des rückgestreuten Lichtes der wellenlängenabhängige Verlauf der Rückstreuintensität als Produkt angesetzt wird aus einer Funktion mit freien Parametern, welche das wellenlängenabhängige Rückstreulichtspektrum einer trockenen Fahrbahnoberfläche darstellt, und einem exponentiellen Absorptionsterm, der die Lichttransmission einer Wasserschicht bestimmter Dicke beschreibt,
   - die freien Parametern anhand der tatsächlichen Meßwerte im Sinne einer bestmöglichen Approximation errechnet werden und
   - aus der Approximation auf den Zustand der Fahrbahnoberfläche geschlossen wird.

2. Verfahren zur Bestimmung des Zustands einer Fahrbahnoberfläche, bei dem

   - auf die Fahrbahnoberfläche Licht eingestrahlt wird und
   - das von der Fahrbahnoberfläche rückgestreute Licht von Detektoren mit jeweils unterschiedlicher spektraler Empfindlichkeit erfaßt wird und aus der in den Meßsignalen enthaltenen Information auf den auf den Zustand der Fahrbahnoberfläche wenigstens hinsichtlich Vorhandenseins von Wasser/Eis geschlossen wird,
     **dadurch gekennzeichnet, daß**
   - zur Auswertung der von den Detektoren umgewandelten Lichtintensitäten jede von einem Detektor i insgesamt umgewandelte Lichtintensität $I_i$ dargestellt wird als Integral der Wellenlänge über eine Produktfunktion aus der spektralen Empfindlichkeit $E_i(\lambda)$ des Photodetektors und der wellenlängenabhängigen Rückstreuintensität S($\lambda$),
   - die wellenlängenabhängigen Rückstreuintensität S($\lambda$) als Produkt angesetzt wird aus einer Funktion mit freien Parametern, welche das wellenlängenabhängige Rückstreulichtspektrum einer trockenen Fahrbahnoberfläche darstellt, und einem exponentiellen Absorptionsterm, der die Lichttransmission einer Wasserschicht bestimmter Dicke beschreibt,
   - die freien Parametern anhand der tatsächlichen Meßwerte im Sinne einer bestmöglichen Approximation errechnet werden und
   - aus der Approximation auf den Zustand der Fahrbahnoberfläche geschlossen wird.

3. Verfahren nach Anspruch 1 oder 2,
   **dadurch gekennzeichnet, daß**

   - das Rückstreulichtspektrum einer trockenen Fahrbahn angesetzt wird als eine parameterabhängige wellenlängenabhängige Funktion P($\lambda$, A, B, ...) multipliziert mit der Summe aus einem Bruchteil eines ersten Referenzspektrums $S_0(\lambda)$ und einem Bruchteil eines zweiten Referenzspektrums $S_1(\lambda)$, wobei das erste Referenzspektrum $S_0(\lambda)$ bei fehlendem Umgebungslicht und aktivierter Lichterzeugungseinheit und das zweite Referenzspektrum $S_1(\lambda)$ für Tageslicht bei abgeschalteter Lichterzeugungseinheit jeweils für einen bestimmten Referenz-Fahrbahnbelag aufgenommen wurden und
   - aus der Approximation auch der Bruchteilsfaktor ermittelt wird, mit dem die beiden Referenzspektren beitragen.

4. Verfahren nach Anspruch 3 in der Rückbeziehung auf Anspruch 1,

**dadurch gekennzeichnet, daß**
zumindest der Bruchteilsfaktor in einem Wellenbereich ohne signifikante Wasser/Eis-Absorption bestimmt wird.

5. Verfahren nach Anspruch 1 oder 2,
   **dadurch gekennzeichnet, daß**
   weitere aus der Approximation zu bestimmende Parameter, welche neben der Wasserdicke in den exponentiellen Absorptionsterm eingehen, die Wassertemperatur, die Eistemperatur oder ein Parameter für den Eisanteil sind, wobei bei der Modellierung die tatsächlichen Absorptionskurven von Wasser oder Eis zugrundegelegt werden.

6. Verfahren nach Anspruch 5,
   **dadurch gekennzeichnet, daß**
   die ermittelte Wassertemperatur angezeigt wird und/oder eine Warnung ausgegeben wird, wenn die ermittelte Wassertemperatur sich dem Gefrierpunkt nähert.

7. Verfahren nach Anspruch 3 oder 4,
   **dadurch gekennzeichnet, daß**
   der Bruchteilsfaktor zumindest zeitweise mittels eines Umgebungssensors laufend sensoriell ermittelt und anstelle des aus einer vorherigen Aproximation errechneten Bruchteilsfaktors in die Auswertung eingespeist wird.

8. Vorrichtung zur Auswertung von Licht, insbesondere zur Durchführung des Verfahrens nach Anspruch 2, mit einer Empfängereinheit, bei der das Licht durch mehrere Dektoren erfaßt wird, deren spektrale Empfindlichkeit durch Filter unterschiedlich ausgeprägt ist,
   **dadurch gekennzeichnet, daß**

   - die Detektoren Pixel einer Sensorzeile sind,
   - die Filter Absorptionsfilter aus einem Glas- oder Kunststoffkörper sind, dessen Absorptionseigenschaft von der Filterdicke abhängt,
   - die Filter zu einem Absorptionszeilenfilter zusammengefaßt sind, welches in Lichtdurchgangsrichtung vor der Sensorzeile angeordnet ist und dessen Filterdicke in der Weise variiert, daß jedem Pixel eine Filterdicke und damit eine spektrale Empfindlichkeit umkehrbar eindeutig zugeordnet ist.

9. Vorrichtung nach Anspruch 8,
   **dadurch gekennzeichnet, daß**
   das Absorptionszeilenfilter ein Farbglaskeil ist.

10. Vorrichtung nach Anspruch 8 oder 9,
    **dadurch gekennzeichnet, daß**

    - das Filtermaterial so gewählt ist, daß zwischen dem Logarithmus des Absorptionskoeffizienten und der Wellenlänge ein linearer Zusammenhang besteht und
    - ein Mikroprozessor vorgesehen ist, welcher
    - in einem ersten Schritt aus der Gesamtheit der gemessenen Pixelintensitäten eine Fouriertransformierte bildet,
    - in einem zweiten Schritt den Quotienten bildet aus der Fouriertransformierten der Pixelintensitäten und der Fouriertransformierte der Transmissionskurve des Filters bei einer bestimmen Referenzdicke $D_0$ und
    - in einem dritten Schritt durch eine Fourierrücktransformation die wellenlängenabhängige spektrale Intensität des Lichtes errechnet.

Fig. 1

Fig. 2

Fig. 3

Fig. 4